# EUROPEAN PATENT APPLICATION

(11) **EP 1 806 322 A1**
(43) Date of publication of application: **11.07.2007**
(21) Application number: 06000257.3
(22) Date of filing: 07.01.2006
(51) Int. Cl.: C02F 1/28

(54) **Water filter device with replaceable filter cartridge**

(71) Applicant: Wal SA, 1208 Genève (CH)
(72) Inventor: Pirker, Hans, 6580 St Anton (AT); Hainich, Serge B., 1208 Geneva (CH)
(74) Representative: Rehberg Hüppe + Partner

(57) **Abstract**

A water filter device (1) includes a water container (2), a water funnel (3) and a replaceable filter cartridge (5). The water funnel (3) has a neck (6) which extends into the water container (2) and which houses the filter cartridge (5). The filter cartridge (5) defines a water passage (13) through which water filled in the water funnel (3) enters the container (2); and the filter cartridge (5) includes a filter media (19) arranged within the water passage (13) and at least partially arranged within the water container (2). Further, the filter cartridge (5) includes a swelling media (17) within a delimited upper section (14) of the water passage (13), the delimited upper section (14) of the water passage (13) being located above at least a major part of the filter media (19) in the filter cartridge (5); and the swelling media (17) is contacted by water flowing through the delimited upper section (14) of the water passage (13), the swelling media (17) swells in contact with the water, and the swelling media (17) closes the water passage (13) after contact with a certain amount of water flowing through the delimited upper section (14) of the water passage (13).

## Description

### FIELD OF THE INVENTION

The present invention relates to a water filter device with a replaceable filter cartridge, the device comprising the features of the preamble of claim 1. Further, the present invention relates to a replacement filter cartridge for a water filter device, the cartridge comprising the features of the preamble of claim 4.

### BACKGROUND OF THE INVENTION

A filter cartridge used for filtering water is exhausted after having filtered a certain amount of water. When the filter cartridge is exhausted, it is not only no longer filtering the water properly but it may also set free contaminants into the water which have previously been filtered out.

Various mechanisms have been proposed to indicate when a filter cartridge of a water filter device is exhausted. For example there are counters counting the number of times at which a lid of a water filter device is raised to fill water into the water filter device. When the counter has reached a certain value it is indicated to the user of the water filter device that the filter cartridge is exhausted. This indirect method of monitoring the filter cartridge has the drawback that it does actually not register the amount of water which has already been filtered by the filter cartridge but only an indirect indication of the amount of water which has been filled in the water device.

In another water filter device a flow meter is arranged in the passage of the water through the filter cartridge. With the flow meter it is possible to exactly monitor the amount of water which has already been filtered by a filter cartridge. However, a flow meter is expensive. Particularly, it is too expensive for being arranged in and disposed with an exhausted filter cartridge.

A water filter device comprising the features of the preamble of claim 1 and a filter cartridge comprising the features of the preamble of claim 4 are known from EP 1 060 130 B1. Here, shut off means are provided for shutting off the water passage defined by the filter cartridge. The shut off means comprise an obturator disposed over a corresponding orifice of the water passage and means for restraining the obturator in a position such that the orifice is not shut off. The restraining means are exposed to the flow of the waters through the water passage, and they are selected in such a way that they undergo a change of state corresponding to the period of exposure to the flow of water in order to release the obturator so that it shut offs the water passage after a pre-determined amount of water has flown through the passage and thus been filtered by the cartridge. Particularly, the restraining means undergoing a change of state comprise a spacer interposed between the obturator and the orifice to be shut off, the spacer being made of a material which dissolves slowly in the water. In one embodiment of the known filter cartridge according to figures 5 and 6 of EP 1 060 130 B1, the obturator, the spacer and the orifice are ranged in the upper portion of the filter cartridge, i. e. above the filter media. However, it is not indicated whether these parts are located above a any water level of water in the container. In a further embodiment of the known filter cartridge according to figures 7 and 8 of EP 1 060 130 B1, the water passage comprises a delimited lower section beneath the filter media, which is defined by two permeable walls. In this embodiment the shut off means comprise a capsule disposed in this delimited lower section, the center of the capsule expanding greatly upon contact with the water and a shell of the capsule surrounding its center being impermeable to the water and being subject to slow dissolving upon contact with the water. Thus, the actuator is the center of the capsule and the means for restraining the obturator in a position such that the orifice is not shut of is the shell of the capsule. In all embodiments of the known filter cartridge, a substance is dissolved in the water. i. e. although the water is to be filtered, it is contaminated with an artificial substance of the means for restraining the obturator undergoing a change of state in contact with water. Further, the filtered water in the container tends to dissolve the means for restraining the obturator, even if no new water is filled in the water filter device. Thus, in the known water filter device the period of time after which the obturator closes the orifice so that the filter cartridge can no longer be used is more dependent on the time for which the filter cartridge is in contact with water then on the amount of water which flew through the filter cartridge. Further, the known filter cartridge is expensive in production because of its various parts constituting the shut off means.

WO 96/03193 A1 discloses a method and apparatus for removal of organic liquids including liquid hydrocarbons from an aqueous stream passing through a conduit. A housing is interposed in the conduit which has a cavity of a pre-determined volume through which the aqueous stream must flow. Inside the cavity a discrete, organic liquid swellable polymer absorbent having a maximum volume upon swelling greater than the predetermined volume of the cavity is disposed, whereby the polymer absorbent can not reach 100 % saturation. This volume limitation of the cavity prevents the solution of the polymer absorbent and permits the use of non-crossed linked polymers.

### PROBLEM OF THE INVENTION

It is the problem of the present invention to provide a water filter device with a replaceable filter cartridge and a replacement filter cartridge for a water filter device which do not contaminate the water to be filtered with any substance but close the water passage through the water filter device after a certain amount of water has been filtered.

### SUMMARY OF THE INVENTION

The problem of the invention is solved by a water filter device according to claim 1 and a filter cartridge according to claim 4. Preferred embodiments of the water filter device are defined in dependent claims 2 and 3. Further preferred embodiments of the water filter device and of the filter cartridge are defined in the dependent claims 5 to 10.

### DESCRIPTION OF THE INVENTION

In the invention the filter cartridge includes a swelling media within a delimited upper section of the water passage. The limited upper section of the water passage is located above at least a major part of the filter media in the filter cartridge. The position of the delimited upper section of the water passage is such that the swelling media is above a maximum working water level of water contained in the container i. e. of water which has already been filtered by flowing through the filter cartridge and is now ready to be poured out of the container. Thus, the swelling media is not in contact with such water already filtered but only gets into contact with water flowing through the delimited upper section of the water passage. Preferably, the delimited upper section of the water passage is even located above a maximum water level in the container so that water which got into the container is under no circumstances still in contact with the swelling media in the delimited upper section of the water passage. As a result, the swelling media which is contacted by the water flowing through the delimited upper section of the water passage is swelling corresponding to the amount of water flowing through the delimited upper section of the water passage, and, when the swelling media closes the water passage, this indicates that the swelling media contacted a certain amount of water which has flown through the filter cartridge. By selecting the type and the amount of the swelling media this certain amount of water can be tuned to the amount of water after which the filter media and the filter cartridge is exhausted. In the new filter cartridge there is not means undergoing a change of state, particularly no means being dissolved in the water to be filtered. The swelling media gets into direct contact with any water flowing through the water passage of the filter cartridge. Thus, there is also no restraining means beside an obturator. There is only the swelling media in the delimited upper section of the water passage.

Preferably the delimited upper section of a water passage is the uppermost part of the water passage defined by the filter cartridge.

Preferably, the swelling media is a particulate media. For example, it may comprise a hydrogel. Most preferred, the hydrogel is insoluble in water. However, the hydrogel may also, in principle be soluble in water, if it is not dissolved prior to closing the water passage. Thus, under no circumstances there is a change of state of the swelling media in the new filter cartridge, it is always semi-solid.

To avoid that the hydrogel is dissolved in water, the hydrogel may be a cross-linked hydrogel.

Hydrogels which have been tested for their physiological compatibility are available from various sources. They may consist of hydrophilic monomers which are as such soluble in water and which are cross-linked to form, a polymer. This polymer takes up water by an osmotic mechanism and swells because of the water taken up.

Other features and advantages of the present invention will become apparent to one with skill in the art upon examination of the following drawings and the detailed description. It is intended that all such additional features and advantages be included herein within the scope of the present invention, as defined by the claims.

### BRIEF DESCRIPTION OF THE DRAWINGS

The invention can be better understood with reference to the following drawings. The components in the drawings are not necessarily to scale, emphasis instead being placed upon clearly illustrating the principles of the present invention. In the drawings, like reference numerals designate corresponding parts throughout the several views.

**Fig. 1** is a vertical cross sectional view through a first embodiment of the new filter device.

**Fig. 2** is a vertical cross sectional view through details of a second embodiment of the new filter device.

**Fig. 3** is a vertical cross-sectional view through a filter cartridge which may be used in conjunction with the embodiment of the water filter device according to Fig. 1 or Fig. 2, and

**Figs. 4 to 6** are vertical cross-sectional views through other embodiments of the new filter cartridge to be used in conjunction with the filter device according to Fig. 1 or Fig. 2 or any other filter device.

### DETAILED DESCRIPTION

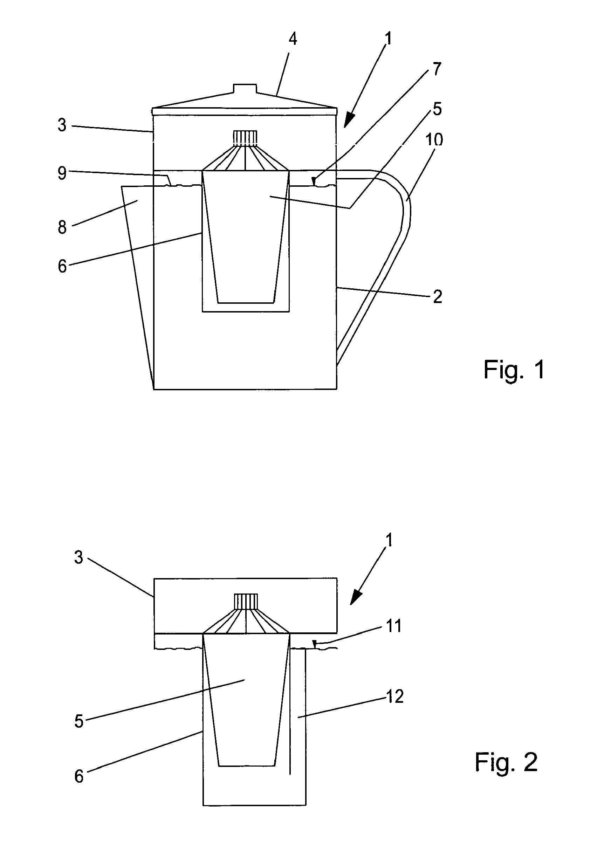

Referring now in greater detail to the drawings, **Fig. 1** illustrates a water filter device 1. The water filter device 1 comprises a water container 2 and a funnel 3 which is arranged on top of the water container 2. A lid 4 is closing the funnel 3. After lifting the lid 4, water can be filled in the funnel 3. Water filled in the funnel 3 can only get into the container by flowing through a filter cartridge 5 which is disposed in a neck 6 of the funnel 3 downwardly extending into the container 2. The water flowing from the funnel 3 through the filter cartridge 5 into the container 2 is filtered by a filter media in the filter cartridge 5 which is not depicted In Fig. 1. The water level 7 in the container 2 can not exceed the height of the upper end of a nozzle 8 of the container 2 through which the filtered water can be poured out of the container 2. A handle 10 is provided for handling the device 1 and for pouring the water 9 out of the container 2.

The water filter device 1, which is indicated in **Fig. 2** by means of the funnel 3 and the filter cartridge 5 only, has a fixed working water level 11 defined by the up end of a water conduit 12 upwardly extending from the lower end of the neck 6 of the funnel 3.

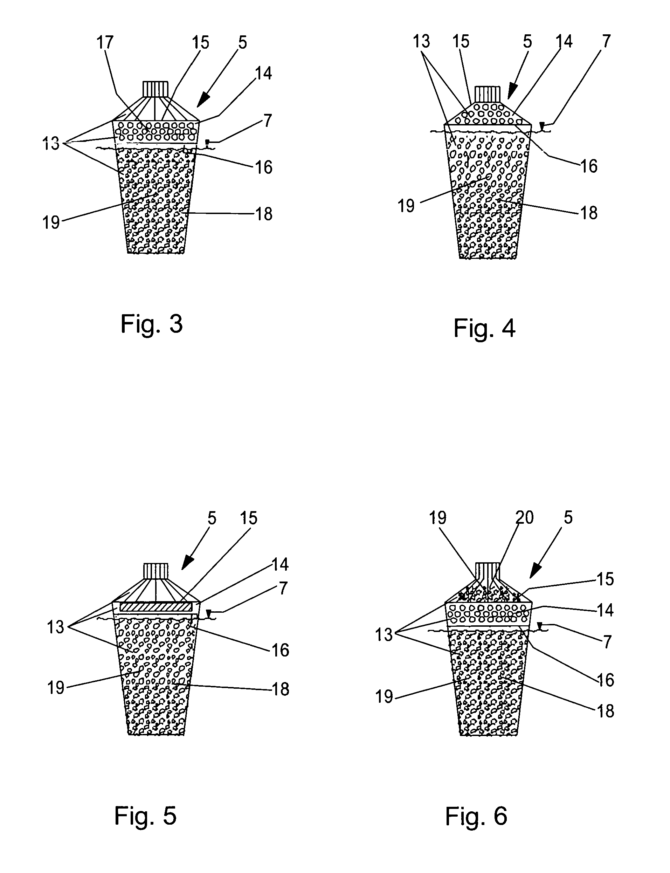

The filter cartridges shown in Figs. 3 to 6 are destined as displacement filter cartridges for a water filter device according to Fig. 1 and Fig. 2 or any other water filter device having a replaceable filter cartridge.

The filter cartridge depicted in **Fig. 3** defines a water passage 13 through which water filled in the funnel 3 according to Fig. 1 or Fig. 2 flows for being filtered. A delimited upper section 14 of the water passage 13 which is delimited by two permeable walls 15 and 16 arranged at a vertical distance contains a swelling media 17. The delimited section 14 of the water passage is located above a section 18 of the water passage containing the filter media 19 for filtering the water and above the maximum working water level 7 of the corresponding water filter device. Thus, the swelling media 17 only gets into contact with water flowing through the filter cartridge 5 but not with water standing in the filter cartridge 5 for a longer period of time. As a result, the actual swelling of the swelling media 17 corresponds to the amount of water which already flew through the filter cartridge 5. When this amount of water reaches or exceeds a predetermined amount of water which indicates that the filter media 19 has been exhausted, the swelling media 17 has swollen to such an extend that it totally fills and occludes the delimited section 14 of the water passage so that no further water may flow through the water passage. This does not happen instantly, instead the flow of water through the filter cartridge 5 is delimited gradually.

The filter cartridge 5 indicated in **Fig. 4** differs from that one according to Fig. 3 in one aspect only. The upper permeable wall 15 of the delimited upper section 14 of the water passage 13 actually is the permeable upper end wall of the filter cartridge 5.

ln the embodiment of the water filter cartridge according to **Fig. 5**, there is again an additional upper permeable wall 15 delimiting the delimited upper section of the water passage. Here, however, the swelling media is no particulate matter but one solid body. The overall function of the swelling media 15 remains the same. However, its surface area over which it may uptake water for swelling is much smaller.

The embodiment of the water filter cartridge according to **Fig. 6** differs from that one according to Fig. 3 in that filter media 19 is not only disposed in the lowermost section 18 of the water passage 13 but also in an uppermost section 20 above the delimited upper section 14 of the water passage 13. However, even here the delimited section 14 of the water passage 13 is located above the water level 7.

Many variations and modifications may be made to the preferred embodiments of the invention without departing substantially from the spirit and principles of the invention. All such modifications and variations are intended to be included herein within the scope of the present invention, as defined by the following claims.

### LIST OF REFERENCE SIGNS

- 1 -: water filter device
- 2 -: container
- 3 -: funnel
- 4 -: lid
- 5 -: filter cartridge
- 6 -: neck
- 7 -: water level
- 8 -: nozzle
- 9 -: water
- 10 -: handle
- 11 -: water level
- 12 -: conduit
- 13 -: water passage
- 14 -: section
- 15 -: wall
- 16 -: wall
- 17 -: swelling media
- 18 -: section
- 19 -: filter media
- 20 -: section

## Claims

1. A water filter device including a water container, a water funnel and a replaceable filter cartridge; the water funnel having a neck which extends into the water container and which houses the filter cartridge; the filter cartridge defining a water passage through which water filled in the water funnel enters the container; and the filter cartridge including a filter media arranged within the water passage and at least partially arranged within the water container; **characterized in that** the filter cartridge (5) includes a swelling media (17) within a delimited upper section (14) of the water passage (13); the delimited upper section (14) of the water passage (13) being located above at least a major part of the filter media (19) in the filter cartridge (5); and the swelling media (17) being contacted by water flowing through the delimited upper section (14) of the water passage (13), the swelling media (17) swelling in contact the with water, and the swelling (17) media closing the water passage (13) after contact with a certain amount of water flowing through the delimited upper section (14) of the water passage (13).

2. The filter device of claim 1, **characterized in that** the delimited upper section (14) of the water passage (13) is located above a maximum working water level (11) of water contained in the container (2).

3. The filter device of claim 2, **characterized in that** the delimited upper section (14) of the water passage (13) is located above a maximum water level (7) in the container (2).

4. A filter cartridge for a water filter device including a water container and a water funnel; the water funnel having a neck which extends into the water container and which houses the filter cartridge; the filter cartridge defining a water passage in which a filter media is arranged; **characterized in that** the filter cartridge (5) includes a swelling media (17) within a delimited upper section (14) of the water passage (13); the delimited upper section (14) of the water passage (13) being located above at least a major part of the filter media (19) in the filter cartridge (5); and the swelling media (17) being contacted by water flowing through the delimited upper section (14) of the water passage (13), the swelling media (17) swelling in contact the with water, and the swelling (17) media closing the water passage (13) after contact with a certain amount of water flowing through the delimited upper section (14) of the water passage (13).

5. The filter device of any of the claims 1 to 3, or the filter cartridge of claim 4, **characterized in that** the delimited upper section (14) of the water passage (13) is the uppermost part of the water passage (13).

6. The filter device of any of the claims 1 to 3 and 5, or the filter cartridge of claim 4 or 5, **characterized in that** the swelling media (17) is a particulate media.

7. The filter device of any of the claims 1 to 3, 5 and 6, or the filter cartridge of any of the claims 4 to 6, **characterized in that** the swelling media (17) comprises a hydrogel.

8. The filter device or the filter cartridge of claim 7, **characterized in that** the hydrogel is insoluble in water.

9. The filter device or the filter cartridge of claim 7 or 8, **characterized in that** the hydrogel is a cross-linked hydrogel.

10. The filter device of any of the claims 1 to 3 and 5 to 9, or the filter cartridge of any of the claims 4 to 9, **characterized in that** the certain amount of water is equal to a maximum amount of water which is effectively filtered by the filter media (19), before the filter media (19) is exhausted.
